# EUROPÄISCHE PATENTANMELDUNG

(11) **EP 1 403 220 A1**
(43) Veröffentlichungstag der Anmeldung: **31.03.2004**
(21) Anmeldenummer: 02021171.0
(22) Anmeldetag: 24.09.2002
(51) Int. Cl.: C02F 1/32

(54) **Verfahren und Vorrichtung zur Entkeimung von Abwasser und oxidativen Inaktivierung darin enthaltener Inhaltsstoffe**

(71) Anmelder: Herwig, Ulrich, 74731 Walldürn (DE)
(72) Erfinder: Herwig, Sascha, 74736 Hardheim (DE); Wurster, Bernd, Dr., 78467 Konstanz (DE); Trageser, Martin, Dr., 63579 Freigericht - 3 (DE)
(74) Vertreter: Lippert, Hans, Dipl.-Ing.

(57) **Zusammenfassung**

Zur Entkeimung von strömendem Abwasser durch UV-Bestrahlung läßt man das in einer Ablaufrinne (230) eines Nachklärbeckens (200) zu einem Rinnenauslauf (250) fließende Abwasser vor Erreichen des Rinnenauslaufs durch einen in die Rinne integrierten UV-Bestrahlungsraum (260) strömen.

## Beschreibung

Die Erfindung betrifft die Behandlung von Abwasser mit UV-Licht zur Entkeimung und oxidativen Inaktivierung sowie zum Abbau darin enthaltener Inhaltsstoffe, und zwar insbesondere von Abwasser biologischer Kläranlagen.

Das aus biologischen Kläranlagen abfließende gereinigte Abwasser enthält Bakterien und mikrobiologisch schwer abbaubare Substanzen wie beispielsweise hormonelle Verbindungen mit Östrogen-Wirkung.

In kommunalen Kläranlagen werden häusliche und gewerbliche Abwässer mit Hilfe von Bakterien gereinigt und weitgehend von organischen (CSB, BSB₅) und anorganischen Inhaltstoffen (Ammonium, Nitrat, Phosphat) befreit. Während im Belebungsbecken der mikrobiologische Abbau erfolgt, wird im Nachklärbecken der Bakterienschlamm von dem behandelten Wasser getrennt. Das Klarwasser wird in der Ablaufrinne des Nachklärbeckens gesammelt und über einen Auslauf in ein Fließgewässer (Vorfluter) geleitet. Da die Abtrennung der Bakterien im Nachklärbecken nicht vollständig ist, enthält das abfließende Klarwasser noch einen kleinen Teil der Bakterien. Ebenfalls sind in dem Klarwasser mikrobiologisch schwer abbaubare Substanzen wie beispielsweise Östrogene und verwandte chemische Verbindungen mit Östrogen-Wirkung, z.B. aber auch andere Hormone und Wirkstoffe vorhanden, die im herkömmlichen Routinebetrieb der Kläranlage nicht in ausreichendem Maße inaktiviert werden können.

Zur Wasserentkeimung hat sich die UV-Bestrahlung als zweckdienlich erwiesen, weil sie wirksam ist und ohne Chemikalien auskommt sowie keine sekundären Schadstoffe produziert. Die Entkeimung von Kläranlagenablauf erfolgt bislang in den Nachklärbecken nachgeschalteten UV-Reaktoren, wobei in der Regel eine Verrohrung zum Reaktor, eine zusätzliche Pumpe und eine Umhausung des Reaktors notwendig sind.

Die im Kläranlagenablauf vorhandenen Substanzen mit Östrogen-Wirkung stammen einerseits von menschlichen Ausscheidungen und andererseits von verschiedenen Industriechemikalien (Bisphenol A, Nonylphenol u.a.). Die möglichst vollständige Inaktivierung von Östrogen-Wirkstoffen ist von großer Bedeutung, weil dieselben in Vorflutern zur Feminisierung aquatischer Organismen führen können. Des weiteren muss verhindert werden, dass diese Wirkstoffe über Oberflächengewässer in das Trinkwasser und von da in den Menschen gelangen und dort ähnliche negative Wirkungen entfalten können.

Zur Bewältigung dieser Probleme gibt es bislang im Kläranlagenbereich einige wenige Pilotversuche z.B. unter Verwendung der Membranbiologie, bei der die Bakterien in der Belebungsstufe länger verweilen und sich Populationen bilden können, die bestimmte Wirkstoffe besser abbauen. Andere Untersuchungen zeigen, dass durch Adsorptionsflockungs-Filtration mit Aktivkohle Substanzen mit Östrogen-Wirkung aus dem Kläranlagenablauf eliminiert werden können. Die damit verbundenen hohen Betriebskosten stehen jedoch der Umsetzung dieses Verfahrens im Wege.

Aus Anwendungen bei der Abwasserreinigung verschiedener Antibabypillen-Hersteller ist bekannt, dass sich Östrogene mit Hilfe der UV-aktivierten Oxidation relativ gut inaktivieren lassen. Bei diesen Anwendungen setzt man ein Oxidationsmittel wie Wasserstoffperoxid zu, das sich durch UV-Strahlen in Hydroxylradikale spalten lässt. Hydroxylradikale greifen als sehr starkes Oxidationsmittel die Östrogene an und zersetzen sie, wobei deren Wirkung verloren geht. Auch andere Hormone und Wirkstoffe können mit UVaktivierter Oxidation inaktiviert und abgebaut werden.

Es ist auch bekannt, dass Titandioxid in der Anatas-Modifikation als Fotokatalysator wirkt. Das heißt, UV-Licht mit Wellenlängen unterhalb von 380 nm bewirkt eine Anregung von Titandioxid, und das angeregte Titandioxid reagiert mit Wasser unter Bildung von Hydroxylradikalen. Diese Art von Behandlung wurde auch bereits zur Abwasserreinigung in Betracht gezogen.

Zur Desinfektion mittels UV-Bestrahlung ist es ferner bekannt, auf dem Gerinneboden eines Gerinnes eine Vorrichtung zur UV-Bestrahlung anzuordnen. Die UV-Bestrahlungsvorrichtung wird von dem im Gerinne fließenden Abwasser durchströmt und besitzt mehrere UV-Module, die parallel zueinander angeordnet sind und sich waagrecht in der Strömungsrichtung des Abwassers erstrecken. Vergleiche beispielsweise EP 1016630 A.

Aufgabe der Erfindung ist es, die UV-Bestrahlung von Abwasser kostengünstig und praktikabel zu gestalten.

Diese Aufgabe wird durch den Gegenstand des Anspruchs 1 gelöst. Bevorzugte Weiterbildungen sind in den Unteransprüchen gekennzeichnet.

In dem erfindungsgemäßen Verfahren zur Entkeimung von strömendem Abwasser durch UV-Bestrahlung wird das in einer Ablaufrinne eines Nachklärbeckens zu einem Rinnenauslauf fließende Abwasser vor Erreichen des Rinnenauslaufs durch einen in die Rinne integrierten UV-Bestrahlungsraum geleitet. Hierzu wird das Abwasser vorzugsweise nach unten in und durch einen unterhalb des Niveaus des Rinnenbodens vorgesehenen in die Rinne integrierten UV-Bestrahlungsraum geleitet. Die Innenseite des Bestrahlungsraums ist bevorzugt zumindest teilweise mit fotokatalytisch aktivem Titandioxid beschichtet.

In der erfindungsgemäßen Ablaufrinne für ein Nachklärbecken zur Durchführung des Verfahrens ist in der zu einem Rinnenauslauf führenden Ablaufrinne vor dem Rinnenauslauf ein UV-Bestrahlungsraum mit einer darin herausnehmbar installierten UV-Bestrahlungsvorrichtung integriert. Vorzugsweise ist zu beiden Seiten des Rinnenauslaufs ein UV-Bestrahlungsraum in die Rinne integriert, und nach einer bevorzugten Weiterbildung liegt der UV-Bestrahlungsraum unter dem Niveau des Rinnenbodens.

Das Wesen der Erfindung besteht somit darin, in eine Ablaufrinne eines Nachklärbeckens vor dem Rinnenauslauf eine Abwasserbehandlungseinrichtung, insbesondere in Form einer hier erläuterten Entkeimungseinrichtung, in die eigentliche Rinne zu integrieren bzw. einzubinden. Dies ist bezüglich der Herstellung und des Betriebs einschließlich der Wartung der Einrichtung eine äußerst kostengünstige und praktikable Lösung, zumal damit eine äußerst umfassende Behandlung des Abwassers bereits vor dem Kläranlagenauslauf ermöglicht wird. Die Erfindung ist auf eine entsprechend ausgebildete Ablaufrinne als auch ein entsprechend ausgebildetes Segment einer Ablaufrinne gerichtet.

Zur kostengünstigen Entkeimung des in biologischen Kläranlagen behandelten Wassers werden bevorzugt die beiderseits des Rinnenauslaufs liegenden Segmente der Ablaufrinne eines Nachklärbeckens durch eine Vertiefung so gestaltet, dass sie mit UV-Strahlern, die sich in einer mobilen Vorrichtung befinden, bestückt werden können. Ferner wird bevorzugt zur gleichzeitigen oxidativen Inaktivierung von Östrogenen und verwandten chemischen Verbindungen die Vertiefung eines Rinnensegments mit fotokatalytisch aktivem Titandioxid beschichtet und mit UV-Strahlern geeigneter Intensität ausgerüstet. Mit dieser bevorzugten kombinierten Integration sowohl der UV-Bestrahlung als auch der Behandlung unter Ausnutzung von Titandioxid in dem erfindungsgemäßen Bestrahlungsraum ist eine äußerst kostengünstige und umfassende Nachbehandlung des Abwassers möglich.

Alternativ oder ergänzend zur Titandioxidbeschichtung können auch Oxidationsmittel wie das weiter oben bereits erwähnte Wasserstoffperoxid oder Peroxysäuren wie Peroxyessigsäure beispielsweise über eine Zuleitung zugesetzt werden.

Durch die kostengünstige Bauweise mit direkter Integration der UV-Vorrichtung in erfindungsgemäß umgestaltete Abschnitte oder Segmente der Ablaufrinne wird im Vergleich zu herkömmlichen, nachgeschalteten UV-Reaktoren erheblich weniger Material verbraucht. Der Verzicht auf Verrohrungen vom Rinnenauslauf bzw. Kläranlagenauslauf zum UV-Reaktor, zusätzliche Pumpen und die Einhausung des UV-Reaktors führt zur Schonung von Ressourcen. Das Gleiche trifft zu für die Integration der Mittel zur Inaktivierung von Östrogen-Wirkstoffen in die Ablaufrinne bzw. Segmente der Ablaufrinne.

Die Entkeimung des gesamten Kläranlagenablaufs wird insbesondere bei der Einleitung in schwache Vorfluter die Belastung mit Bakterien verhindern und seuchenhygienisch unbedenklich werden.

Zur Entkeimung werden bevorzugt UV-Niederdruckstrahler eingesetzt und zur oxidativen Inaktivierung von Östrogenwirkstoffen werden bevorzugt Niederdruck- und Mitteldruckstrahler eingesetzt. Die Beschichtung mit Titandioxid erfolgt vorzugsweise mittels eines Bedampfungsverfahrens.

Die übliche Reinigung der Ablaufrinne von oben mit rotierenden Bürsten wird durch die erfindungsgemäße Ausgestaltung der Rinne nicht behindert. Elektrische Anschlüsse von unten sind einfacher durchzuführen und weniger störend. Ein Austausch der gesamten UV-Bestrahlungsvorrichtung anstelle einzelner UV-Module ist möglich.

Nach einer bevorzugten Weiterbildung ist der UV-Bestrahlungsraum mindestens teilweise durch eine flüssigkeitsdurchlässige herausnehmbare Abdeckung abgedeckt, wobei sich die Abdeckung auf der Höhe des Rinnenbodens befindet.

Die Abdeckung weist bevorzugt quer zur Strömungsrichtung verlaufende lamellenartige Bleche zur Abschirmung und Rückreflexion des UV-Lichts auf. Die vorzugsweise verstellbaren Bleche sind als Strömungsleitbleche ausgebildet, die durch ihre Anstellung gegenüber der Strömungsrichtung eine Einleitung des Abwassers in den UV-Bestrahlungsraum fördern.

Der Boden des UV-Bestrahlungsraumes kann sich bis zum Rinnenauslauf im wesentlichen waagrecht oder mit leichtem Gefälle erstrecken oder wird alternativ vor dem Rinnenauslauf durch eine wannenartige Mulde begrenzt.

Nach einer Ausführung der Erfindung ist die Ablaufrinne im Bereich des Bestrahlungsraums verbreitert.

Die UV-Bestrahlungsvorrichtung umfaßt bevorzugt sich quer zur Strömungsrichtung bzw. quer zur Rinnenlängsrichtung erstreckende röhrenförmige UV-Bestrahlungsmodule.

In einem den UV-Bestrahlungsraum begrenzenden Wandabschnitt ist bevorzugt eine Durchführung für ein elektrisches Kabel zur elektrischen Versorgung der UV-Bestrahlungsvorrichtung vorgesehen.

Vorzugsweise sind im Bestrahlungsraum (160; 260) mit Druckwasser beaufschlagte Reinigungsdüsen vorgesehen, die zur Entfernung von Belag auf der UV-Bestrahlungsvorrichtung (170; 270) und möglichst auch auf der Innenwandung des UV-Betrahlungsraums dienen. Die Druckwasserzufuhr erfolgt gleichermaßen wie die elektrische Versorgung über eine Durchführung in einem seitlichen Wand- oder Bodenabschnitt des UV-Bestrahlungsraums, so daß die eigentliche Ablaufrinne frei von Einbauten ist und deswegen die Reinigung der Ablaufrinne im Zuge einer bei Rundbecken umlaufenden Räumerbrücke nicht beeinträchtigt wird. Durch die Reinigungswirkung mit den Düsen können die Intervalle zur Grundreinigung mit Herausnahme der UV-Bestrahlungsvorrichtung verlängert werden.

In einem im wesentlichen senkrecht verlaufenden Ablaufrohr/Ablaufkasten des Rinnenauslasses kann nach der Erfindung eine zusätzliche UV-Bestrahlunsgvorrichtung angeordnet sein mit sich vorzugsweise in Strömungsrichtung erstreckenden UV-Bestrahlungsmodulen.

Bevorzugte Ausführungsbeispiele der Erfindung sind in der beigefügten Zeichnung schematisch dargestellt und werden nachstehend beschrieben. Es zeigen:
Fig. 1 eine Ansicht von oben auf einen Teil eines Nachklärbeckens mit einer nach einem ersten Ausführungsbeispiel der Erfindung ausgebildeten Ablaufrinne;
Fig. 2 eine Ansicht von oben auf ein Segment der Ablaufrinne nach Fig. 1;
Fig. 3 einen Längsschnitt durch das Rinnensegment längs der Linie III - III in Fig. 2;
Fig. 4 einen Querschnitt durch das Rinnensegment längs der Linie IV - IV in Fig. 2;
Fig. 5 eine Ansicht von oben auf einen Teil eines Nachklärbeckens mit einer nach einem zweiten Ausführungsbeispiel der Erfindung ausgebildeten Ablaufrinne;
Fig. 6 eine Ansicht von oben auf ein Segment der Ablaufrinne nach Fig. 5;
Fig. 7 einen Längsschnitt durch das Rinnensegment längs der Linie VII - VII in Fig. 6;
Fig. 8 einen Querschnitt durch das Rinnensegment längs der Linie VIII - VIII in Fig. 6.

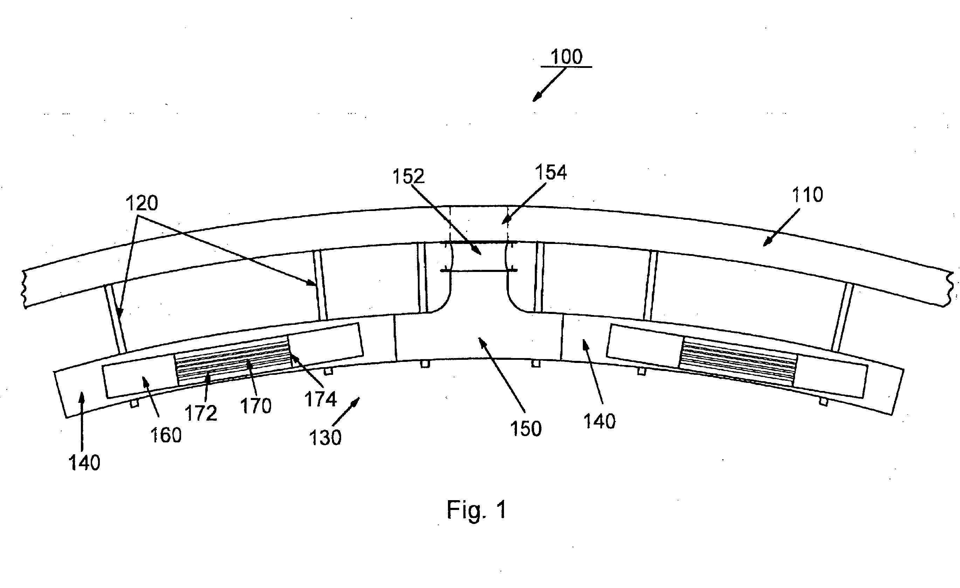

Fig. 1 zeigt in schematischer Darstellung einen zur Erläuterung der Erfindung zu betrachtenden Teil eines Nachklärbeckens 100. Das Nachklärbecken 100 hat eine kreisförmige Umfangswand 110, die die Außenwand des Beckens bildet und im allgemeinen aus Beton hergestellt ist. An der Innenseite der Umfangswand 110 sind in Abständen radial nach innen ragende Auflager 120 angebracht. Die Auflager 120 dienen zur Abstützung einer umlaufenden Ablaufrinne 130. Vorzugsweise ist die Ablaufrinne 130 höhenverstellbar und verschieblich auf den Auflagern 120 gelagert. Bei der gezeigten Ausführung ist zwischen der Ablaufrinne 130 und der Umfangswand 110 ein Abstand vorgesehen. Im Nachklärbecken geklärtes Abwasser kann daher längs der Umfangswand 110 von beiden Seiten in die Ablaufrinne 130 eintreten. Dies geschieht im allgemeinen durch Überfall über ein an der Oberkante der Ablaufrinne ausgebildetes Überfallwehr oder/und durch Unterwasserabzug über in der Ablaufrinne unterhalb des Wasserspiegels vorgesehene Löcher. Das aus dem Becken in die Ablaufrinne eingetretene Abwasser fließt in der Ablaufrinne zu einem Rinnenauslaß, der im allgemeinen mit einem durch die Beckenaußenwand nach außen geführten Ablaufrohr verbunden ist. Vorzugsweise hat der Rinnenboden ausgehend von einer dem Rinnenauslauf diametral gegenüberliegenden Stelle ein leichtes Gefälle in Richtung auf den Rinnenauslauf. Die Ablaufrinne ist vorzugsweise aus Edelstahl hergestellt und besteht aus mehreren miteinander verschweißten oder andersartig miteinander verbundenen Segmenten. Der Zulauf erfolgt im allgemeinen im Zentrum des Beckens mit Hilfe eines Strömungswandlers.

Nachklärbecken mit einem Zulauf- und Ablaufsystem der oben beschriebenen Art sind allgemein bekannt. Bezüglich eines bekannten Zulaufsystems sei beispielsweise auf die DE 4437330 verwiesen. Bekannte Ablaufsysteme und Ablaufrinnen, auf die die Erfindung angewendet werden kann, sind beispielsweise beschrieben in DE 9421888 U, DE 29611775 U oder DE 29720427 U.

In Fig. 1 sind drei Segmente der aus zahlreichen, zu einer ringförmigen Ablaufrinne 130 miteinander verbundenen Segmente gezeigt. Es handelt sich dabei um ein Rinnenauslaufsegment 150, hier kurz "Rinnenauslauf" genannt, und um zwei beiderseits des Rinnenauslaufs 150 liegende Segmente 140.

Der Rinnenauslauf 150 ist im wesentlichen in herkömmlicher Weise ausgebildet und über einen zum Dehnungsausgleich dienenden Kompensator 152 mit einem durch die Umfangswand 110 geführten Ablaufrohr 154 verbunden, das in Fig. 1 lediglich angedeutet ist.

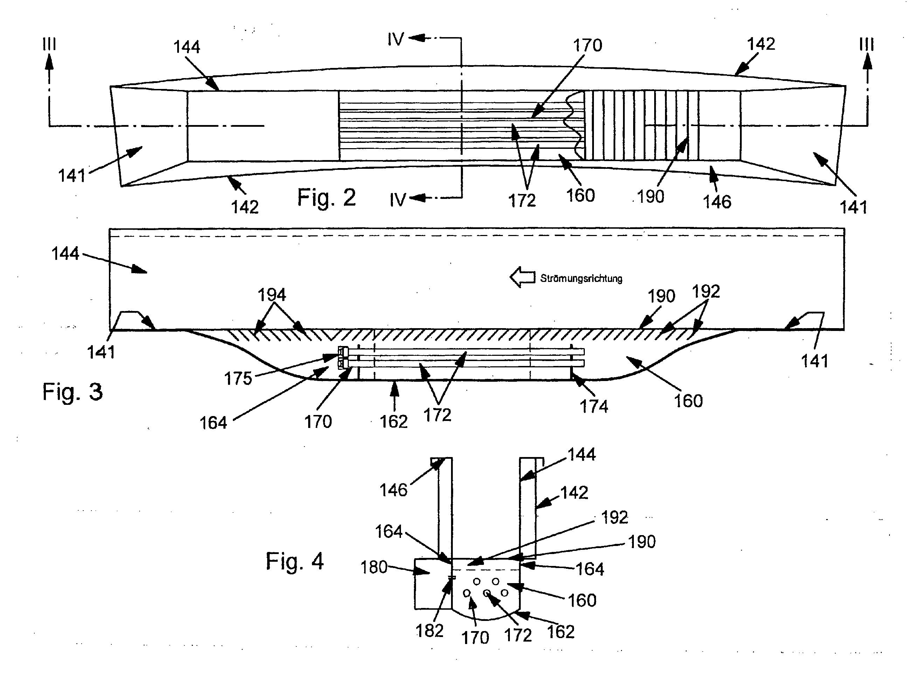

Die beiden mit dem Rinnenauslauf 150 verbundenen Segmente 140 sind gemäß einem ersten Ausführungsbeispiel der Erfindung ausgebildet. Zur Erläuterung dieser erfindungsgemäßen Ausbildung soll das in Fig. 1 an die rechte Seite des Rinnenauslaufs 150 angrenzende Segment 140 unter Bezugnahme auf Fig.2 bis 4 näher beschrieben werden. Das an die linke Seite des Rinnenauslaufs 150 angrenzende Segment 140 hat prinzipiell einen gleichen Aufbau, wird jedoch nicht von rechts nach links, sondern umgekehrt von links nach rechts von dem in der Ablaufrinne 130 zum Rinnenauslauf 150 fließenden Abwasser durchströmt.

Die Rinnensegmente 140 sind an ihren Enden, die den mit dem Rinnenauslauf 150 verschweißten bzw. andersartig verbundenen Enden gegenüberliegen, mit daran angrenzenden herkömmlichen Rinnensegmenten verbunden, beispielsweise durch Verschweißen. Die herkömmlichen Rinnensegmente sind nicht dargestellt und haben einen durchgehenden Rinnenboden und den Rinnenboden beidseitig begrenzende Seitenwände. Die Oberkanten der beiden Seitenwände sind in Form von Überfallwehren ausgebildet, über die im Becken geklärtes Abwasser in die Ablaufrinne eintritt.

Im Gegensatz zu den nicht dargestellten herkömmlichen Rinnensegmenten hat das Rinnensegment 140 Seitenwände 142, deren Oberkanten höher als der im Becken erwartete Wasserspiegel ist. In den Seitenwänden 142 sind auch keine Unterwasserabzugslöcher vorgesehen. Über und durch die Seitenwände 142 kann daher kein Abwasser aus dem Becken in das Rinnensegment 140 eintreten. Entsprechendes gilt für den Rinnenauslauf 150. Somit kann lediglich von dem angrenzenden herkömmlichen Rinnensegment geklärtes Abwasser aus dem Becken in das Rinnensegment 140 und von dort zum Rinnenauslauf 150 gelangen.

Ferner ist im Gegensatz zu den nicht dargestellten herkömmlichen Rinnensegmenten in das Rinnensegment 140 ein unter dem Niveau des normalen Rinnenbodens 141 liegender UV-Bestrahlungsraum 160 in Form einer Vertiefung integriert. Der UV-Bestrahlungsraum 160 erstreckt sich in Längsrichtung des Rinnensegments 140 und hat im wesentlichen eine wannenförmige Gestalt. Der UV-Bestrahlungsraum 160 ist an seiner Unterseite von einem Boden 162 und an seinen beiden Seiten von jeweils einer Seitenwand 164 begrenzt. An seiner Oberseite ist der UV-Bestrahlungsraum 160 von einer flüssigkeitsdurchlässigen, herausnehmbaren Abdeckung 190 begrenzt. Die Abdeckung 190 hat beispielsweise die Form eines Gitters oder Rostes und erstreckt sich auf dem Niveau des Rinnenbodens 141, der im Bereich des UV-Bestrahlungsraumes 160 ausgespart und durch die Abdeckung 190 ersetzt ist. Der Boden 162 des UV-Bestrahlungsraumes 160 grenzt in Rinnenlängsrichtung an den beiden Enden des UV-Bestrahlungsraumes 160 flüssigkeitsdicht am Rinnenboden 141 an.

Im UV-Bestrahlungsraum 160 ist eine UV-Bestrahlungsvorrichtung 170 mit Hilfe von Stütz- und Halteblechen 174 herausnehmbar installiert. Die UV-Bestrahlungsvorrichtung 170 weist mehrere parallel zueinander angeordnete UV-Bestrahlungsmodule 172 auf, die von einander beabstandet sind und sich in Stömungsrichtung bzw. Rinnenlängsrichtung erstrecken. Die UV-Bestrahlungsmodule 172 bestehen aus einem länglichen UV-Strahler und, wie für einen Unterwasser Einsatz allgemein üblich, einem den UV-Strahler mit Abstand umgebenden Hüllrohr, und sie sind, wie es insbesondere aus Fig. 4 hervorgeht, gegeneinander versetzt angeordnet. Am offenen Ende der Hüllrohre sind Stromanschlüsse 175 mit Dichtverschraubung vorgesehen.

Die elektrische Versorgung der UV-Bestrahlungsvorrichtung 170 erfolgt über einen Schaltkasten 180, der außerhalb des UV-Bestrahlungsraumes 160 angrenzend an die Außenseite einer Seitenwand 164 des UV-Bestrahlungsraumes 160 angeordnet ist. In dieser Seitenwand 164 ist eine flüssigkeitsdichte Durchführung 182 für das elektrische Kabel zum Anschließen der UV-Bestrahlungsvorrichtung 170 vorgesehen. Die elektrische Verbindung mit der UV-Bestrahlungsvorrichtung 170 ist innerhalb des UV-Bestrahlungsraumes 160 mittels einer Steckverbindung derart ausgeführt, daß nach Herausnahme der Abdeckung 190 auch die UV-Bestrahlungsvorrichtung 170 ohne weiteres aus dem Bestrahlungsraum 160 herausgenommen werden kann.

Wie es insbesondere aus Fig. 3 hervorgeht, sind an der Unterseite der flüssigkeitsdurchlässigen Abdeckung 190 Lamellen oder Bleche 192 und 194 angebracht. Diese Bleche sind derart angeordnet und gestaltet, daß sie einerseits zur Strömungsleitung dienen und andererseits gegen austretendes UV-Licht schützen sollen. Die Strömungsleit- und UV-Schutzbleche 192 sind in Bezug auf die in Fig. 3 mit einem Pfeil angegebene Strömungsrichtung derart angestellt, daß sie das in der Ablaufrinne 130 zum Rinnenauslauf 150 fließende Abwasser nach unten in den UV-Bestrahlungsraum 160 zwingen und darin für eine Verwirbelung im Bereich der UV-Bestrahlungsvorrichtung 170 rund um die UV-Bestrahlungsmodule 172 sorgen. Dies kann durch zusätzliche Strömungsleiteinbauten im UV-Bestrahlungsraum 160 unterstützt werden.

Demgegenüber sind die Strömungsleit- und UV-Schutzbleche 194 derart angestellt, daß sie das im stromabwärts gelegenen Endbereich des UV-Bestrahlungsraums 160 strömende Abwasser wieder nach oben über das Niveau des Rinnenbodens 141 drücken. Auch dies kann durch zusätzliche Strömungsleiteinbauten im UV-Bestrahlungsraum 160 unterstützt werden.

Der Eintritt des gesamten Abwassers in den UV-Bestrahlungsraum 160 und der anschlie-βende Wiederaustritt kann durch zusätzliche Maßnahmen gefördert werden, wie beispielsweise Absenken des Rinnenbodens 141 am stromabwärts gelegenen Ende im Vergleich zum stromaufwärts gelegenen Ende, Gefälle der Ablaufrinne in Richtung zum Rinnenauslauf bzw. in Strömungsrichtung, Dimensionierung des Querschnitts bzw. der Tiefe und Breite des UV-Bestrahlungraums 160 im Vergleich zur Breite der Ablaufrinne und damit Höhe des Wasserspiegels in der Rinne, Neigung des Rinnensegments 140 zum Rinnenauslauf 150 (Figur 1) hin und dgl. Diese Maßnahmen können nach der Erfindung jeweils einzeln oder in beliebiger Kombination angewendet werden.

Zur Anpassung an unterschiedliche Volumenströme oder Wasserspiegelhöhen in der Ablaufrinne sind die sich quer zur Strömungsrichtung bzw. Rinnenlängsrichtung erstreckenden Strömungsleit- und UV-Schutzbleche 192 und 194 vorzugsweise verstellbar montiert. Zu diesem Zweck sind einige oder auch jedes der Bleche um eine jeweilige Querachse verschwenkbar gelagert. Die Verstellung kann manuell oder motorisch, vorzugsweise auch automatisch in Abhängigkeit von der Wasserspiegelhöhe erfolgen, wobei das Ausmaß der Verstellung von Blech zu Blech auch unterschiedlich sein kann.

Bei einer bevorzugten Ausführung weist die Abdeckung 190 mehrere mit Abstand parallel zueinander in Rinnenlängsrichtung verlaufende Stäbe auf, die die in Rinnenquerrichtung verlaufenden, nach unten weisenden Bleche 192 und 194 tragen. Im übrigen sind die Bleche derart gestaltet, daß in allen möglichen Verstellpositionen der UV-Sichtschutz gewährleistet ist.

Wie es aus Fig. 2 und 4 ersichtlich ist, hat bei der dargestellten Ausführung der UV-Bestrahlungsraum 160 eine kleinere Breite als die Rinne bzw. das Rinnensegment 140. Es sind deshalb innerhalb der Rinnenseitenwände 142 mit Abstand von diesen zusätzliche Rinnenseitenwände 144 vorgesehen, die mit den Seitenwänden 164 des UV-Bestrahlungsraums 160 ausgerichtet sind. An den beiden Enden des Rinnensegments 140 laufen die Rinnenseitenwände 144 nach außen und schließen sich an die Rinnenseitenwände 142 an. Die inneren Rinnenseitenwände 144 stellen sicher, daß das gesamte zuströmende Abwasser durch die flüssigkeitsdurchlässige Abdeckung 190 in den UV-Bestrahlungsraum 160 gelangt.

Die Ablaufrinne 130 einschließlich der Rinnensegmente 140 und des Rinnenauslaufs 150 ist aus Edelstahl hergestellt. Zur besseren Reflexion des UV-Lichts sind alle oder wenigstens einige der dem UV-Bestrahlungsraum 160 zugewandten Edelstahloberflächen elektropoliert. Zusätzlich oder alternativ sind alle oder wenigstens einige der dem UV-Bestrahlungsraum 160 zugewandten Edelstahloberflächen mit fotokatalytisch aktivem Titandioxid beschichtet. Damit kann das Rinnensegment 140 in Kombination mit dem Einsatz von einer oder mehreren jeweils geeigneten UV-Bestrahlungsvorrichtungen zur Entkeimung und/oder oxidativen Inaktivierung von Inhaltsstoffen des Abwassers verwendet werden.

Wie es insbesondere aus Fig. 4 hervorgeht, ist im Rinnensegment 140 der Raum oberhalb des Rinnenbodens 141 bzw. der Abdeckung 190 vollkommen frei von Einbauten, so daß die übliche Reinigung der gesamten Ablaufrinne mit längs der Rinne bewegten Bürsten nicht unterbunden oder gestört wird.

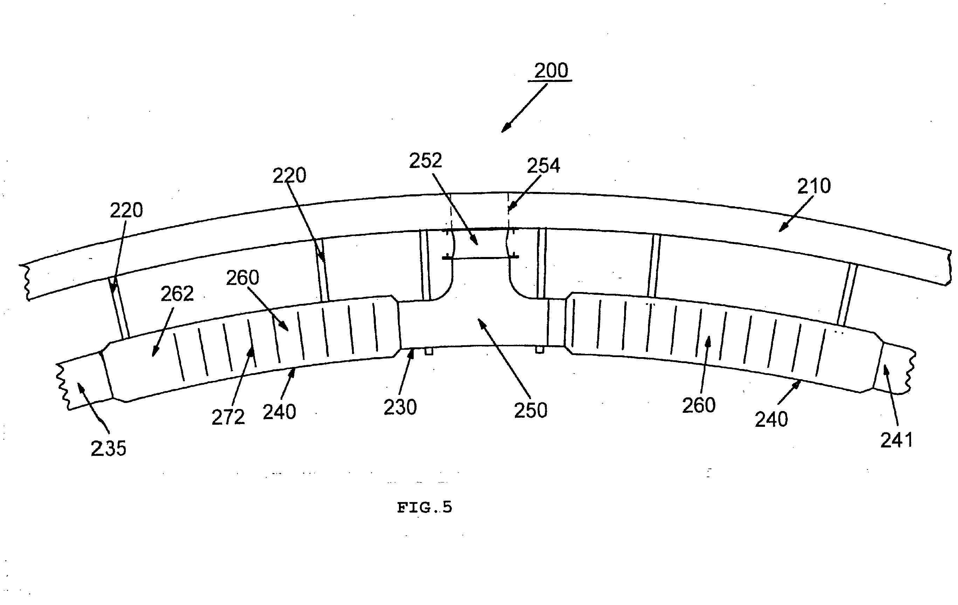

Fig. 5 zeigt in schematischer Darstellung einen zur Erläuterung der Erfindung zu betrachtenden Teil eines Nachklärbeckens 200. Das Nachklärbecken 200 hat den gleichen herkömmlichen Grundaufbau wie das Nachklärbecken 100, so daß in dieser Hinsicht auf die Beschreibung des Nachklärbeckens 100 verwiesen werden kann. Vorgesehen sind somit eine die Außenwand des Beckens bildende kreisförmige Umfangswand 210, Auflager 220, eine umlaufenden Ablaufrinne 230 und ein nicht gezeigter Zulauf.

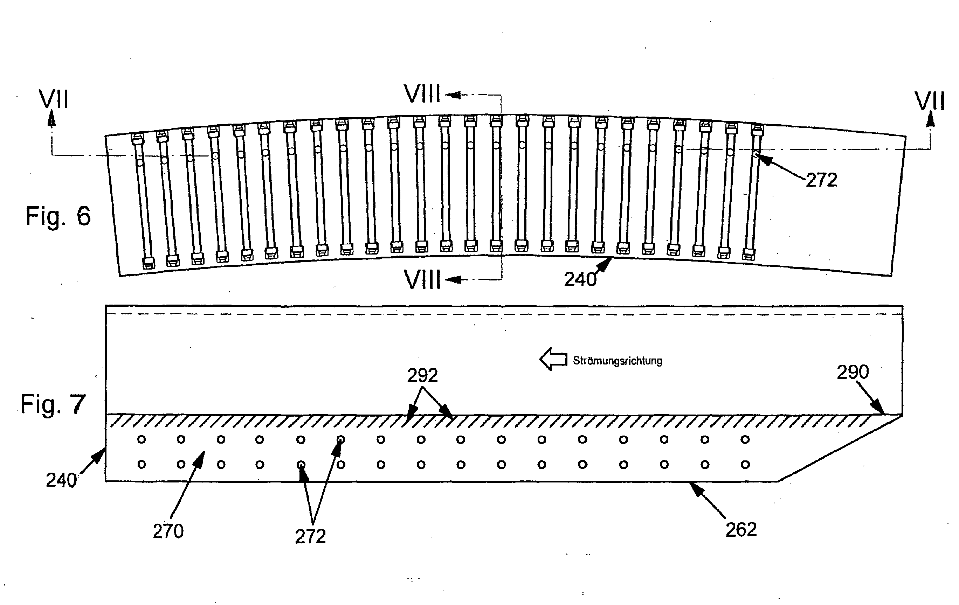

In Fig. 6 sind drei Segmente der zahlreichen, zu einer ringförmigen Ablaufrinne 230 miteinander verschweißten bzw. andersartig verbundenen Segmente gezeigt. Es sind ein im wesentlichen herkömmlicher Rinnenauslauf 250 und zwei beiderseits des Rinnenauslaufs 250 liegende Segmente 240 gezeigt. Der Rinnenauslauf 250 ist, wie beim Nachklärbecken 100, über einen Kompensator 252 mit einem durch die Umfangswand 210 geführten Ablaufrohr 254 verbunden.

Die beiden mit dem Rinnenauslauf 250 verschweißten Segmente 240 sind gemäß einem zweiten Ausführungsbeispiel der Erfindung ausgebildet. Zur Erläuterung dieser erfindungsgemäßen Ausbildung soll das in Fig. 5 an die rechte Seite des Rinnenauslaufs 250 angrenzende Segment 240 unter Bezugnahme auf Fig.6 bis 8 näher beschrieben werden.

Das an die linke Seite des Rinnenauslaufs 250 angrenzende Segment 240 hat prinzpiell den gleichen Aufbau.

Die Rinnensegmente 240 sind an ihren dem Rinnenauslauf 250 gegenüberliegenden Enden mit daran angrenzenden herkömmlichen Rinnensegmenten verschweißt oder andersartig verbunden. In Fig. 5 ist das mit dem linken Rinnensegment 240 verschweißte Ende eines herkömmlichen Rinnensegments 235 angedeutet. Für die herkömmlichen Rinnensegmente gelten die in Verbindung mit dem Nachklärbecken 100 gemachten Aussagen.

Im Gegensatz zu den herkömmlichen Rinnensegmenten, die durch Überfall und/oder Unterwasserabzugslöcher klares Abwasser aus dem Becken abziehen, hat auch das Rinnensegment 240 keine Mittel zum Abziehen von Abwasser aus dem Becken und dementsprechend hohe und lochfreie Seitenwände 242. Entsprechendes gilt für den Rinnenauslauf 250.

Das dem Rinnensegment 140 entsprechende Rinnensegment 240 hat einen unter dem Niveau des normalen Rinnenbodens 242 liegenden UV-Bestrahlunggsraums 260, der von einem Boden 262, Seitenwänden 264 und einer flüssigkeitsdurchlässigen, herausnehmbaren Abdeckung 290 begrenzt ist.

Das Rinnensegment 240 unterscheidet sich vom Rinnenensegment 140 im wesentlichen dadurch, daß der Boden 262 des UV-Bestrahlunggsraums 260 und dementsprechend auch die Abdeckung 290 sich bis zum Rinnenauslauf 250 erstrecken, daß sich die UV-Bestrahlungsmodule 272 der UV-Bestrahlungsvorrichtung 270 quer zur Stömungsrichtung bzw. Rinnenlängsrichtung erstrecken und daß das Rinnensegment 240 im Bereich des UV-Bestrahlunggsraums 260 verbreitert ist.

Im übrigen ist wie beim Rinnensegment 140 die UV-Bestrahlungsvorrichtung 270 mit Hilfe von Stütz- und Halteblechen 274 herausnehmbar installiert, und die elektrische Versorgung der UV-Bestrahlungsvorrichtung 270 erfolgt über einen nicht dargestellten Schaltkasten, der an der Außenseite des Bodens 262 oder der Seitenwand 264 des UV-Bestrahlungsraumes 260 angeordnet ist.

Wie es insbesondere aus Fig. 7 hervorgeht, sind an der Unterseite der flüssigkeitsdurchlässigen Abdeckung 290 Lamellen oder Bleche 292 angebracht, die den Strömungsleit- und UV-Schutzblechen 192 entsprechen. Im übrigen gelten für die Abdeckung 290 und die Bleche 292 die zu der Abdeckung 190 und den Blechen 192 gemachten Aussagen.

Den Blechen 194 entsprechende Bleche sind beim Rinnensegment 240 nicht vorhanden, weil der Boden 262 und die Abdeckung 290 bis zum Rinnenauslauf 250 reichen. Hierbei wird vorausgesetzt, daß der Rinnenauslauf 250 etwa auf dem Niveau des Bodens 262 oder tiefer liegt.

Wie es aus Fig. 5 ersichtlich ist, hat bei der dargestellten Ausführung der UV-Bestrahlungsraum 260 eine größere Breite als die eigentliche Ablaufrinne. Das Rinnensegment 240 hat deshalb zumindest im Bereich des UV-Bestrahlungsraums 260 Rinnenseitenwände 244, die mit den Seitenwänden 264 des UV-Bestrahlungsraums 160 ausgerichtet sind. Diese Ausgestaltung erleichtert die Herausnahme der mit querliegenden UV-Bestrahlungsmodulen 272 ausgerüsteten UV-Bestrahlungsvorrichtung 270 und läßt auch bei einer Queranordnung den Einsatz von relativ langen UV-Modulen zu. Zudem kann mit einem breiteren UV-Bestrahlungsraum Einfluß auf die Srömungsgeschwindigkeit und damit die Verweildauer des zu behandelnden Abwassers im UV-Bestrahlungsraum genommen werden. Es kann auch unabhängig von der Auslegung der übrigen Rinnensegmente ein für die Behandlung optimales Breiten-Tiefen-Verhältnis des UV-Bestrahlungsraums 260 ausgewählt werden.

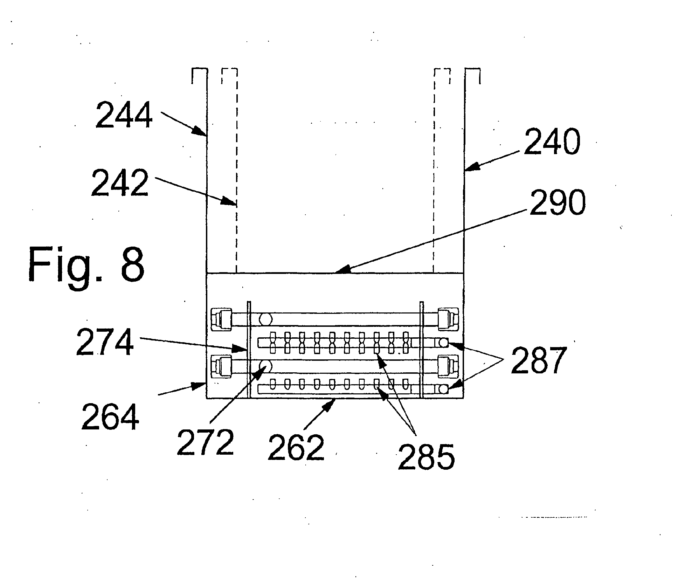

Wie es aus Fig. 5 ersichtlich ist, nimmt an den beiden Enden des Rinnensegments 240 die Breite zwischen den Rinnenseitenwänden 144 bis auf die Rinnenbreite des angrenzenden Rinnensegment 235 und des Rinnenauslaufs 250 ab, um einen kontinuierlichen Übergang herzustellen. In Fig. 8 sind die einen geringeren Breitenabstand aufweisenden Rinnenwände 242 des Rinnenauslaufs 250 gestrichelt angedeutet.

Wie ferner aus Fig. 8 hervorgeht, sind zur Reinigung des Bestrahlungsraumes und der darin befindlichen UV-Module mit Wasserdruck arbeitende Reinigungsdüsen 285 vorgesehen. Diese Düsen werden über Zuleitungsrohre 287 beispielsweise mittels einer nicht dargestellten Pumpe gespeist, wobei sich die Rohre parallel zu den UV-Modulen erstrecken. Mit dieser Reinigungsmöglichkeit ohne erforderlichen Ausbau kann die Standzeit der UV-Bestrahlungsvorrichtung 270 verlängert werden. Die Betätigung der Pumpe erfolgt vorzugsweise synchron mit dem Umlauf des Rundräumers des Nachklärbeckens, welcher den Pumpenbetrieb für eine vorgegebene Zeitspanne auslöst. Das Reinigungswasser wird aus dem Klarwasserbereich des Nachklärbeckens bei der Rinne entnommen. Eine entsprechende Reinigungsvorrichtung kann auch im ersten Ausführungsbeispiel vorgesehen sein.

Das Rinnensegment 240 ist wie das Rinnensegment 140 aus Edelstahl hergestellt und hat elektropolierte bzw. mit fotokatalytisch aktivem Titandioxid beschichtete Edelstahloberflächen.

Wie es insbesondere aus Fig. 8 hervorgeht, ist auch im Rinnensegment 240 die eigentliche Rinne oberhalb des Rinnenbodens 241 bzw. der Abdeckung 290 vollkommen frei von Einbauten.

Die Erfindung ist nicht auf die in der Zeichnung dargestellten und beschriebenen Anwendungs- und Ausführungsbeispiele beschränkt. Ein Fachmann kann hieran mannigfache Abwandlungen vornehmen, ohne dadurch den Rahmen der Erfindung zu verlassen. So liegt es beispielsweise im Rahmen der Erfindung, nach Leistung, Wellenlänge, Innendruck, Gestalt und dgl. solche UV-Bestrahlungsmodule einzusetzen, mit denen eine optimale Behandlung des Abwasser erreicht wird. Entsprechendes gilt für die Anordnung der einzelnen UV-Bestrahlungsmodule als auch der UV-Bestrahlungsmodule in Bezug aufeinander sowie in Bezug auf die Strömungsrichtung, z.B. längs, quer oder auch diagonal dazu, und in Bezug auf elektropolierte und/oder mit fotokatalytisch aktivem Titandioxid beschichtete Edelstahloberflächen.

## Patentansprüche

1. Verfahren zur Entkeimung von strömendem Abwasser durch UV-Bestrahlung, **dadurch gekennzeichnet, daß** man das in einer Ablaufrinne (130; 230) eines Nachklärbeckens (100; 200) zu einem Rinnenauslauf (150; 250) fließende Abwasser vor Erreichen des Rinnenauslaufs durch einen in die Rinne integrierten UV-Bestrahlungsraum (160; 260) strömen läßt.

2. Verfahren nach Anspruch 1, **dadurch gekennzeichnet, daß** man das Abwasser vor Erreichen des Rinnenauslaufs nach unten in und durch den in die Rinne integrierten UV-Bestrahlungsraum (160; 260) strömen läßt, der unterhalb des Niveaus des Rinnenbodens (141, 241) vorgesehen ist.

3. Verfahren nach Anspruch 1 oder 2, **dadurch gekennzeichnet, daß** zur gleichzeitigen oxidativen Inaktivierung von im Abwasser befindlichen Inhaltsstoffen wie Östrogenen und verwandten chemischen Verbindungen die Innenseite des UV-Bestrahlungsraums (160; 260) zumindest teilweise mit fotokatalytisch aktivem Titandioxid beschichtet ist.

4. Ablaufrinne für ein Nachklärbecken zur Durchführung des Verfahrens nach Anspruch 1, 2 oder 3, **dadurch gekennzeichnet, daß** in die zu einem Rinnenauslauf (150; 250) führende Ablaufrinne vor dem Rinnenauslauf (150; 250) ein UV-Bestrahlungsraum (160; 260) integriert ist, der vorzugsweise unter dem Niveau des Rinnenbodens liegt und mit einer darin herausnehmbar installierten UV-Bestrahlungsvorrichtung (170; 270) versehen ist.

5. Ablaufrinne für ein Nachklärbecken nach Anspruch 4, **dadurch gekennzeichnet, daß** der UV-Bestrahlungsraum (160; 260) mindestens teilweise durch eine flüssigkeitsdurchlässige herausnehmbare Abdeckung (190: 290) abgedeckt ist, wobei sich die Abdeckung auf der Höhe des Rinnenbodens befindet.

6. Ablaufrinne nach Anspruch 4 oder 5, **dadurch gekennzeichnet, daß** die Abdeckung quer zur Strömungsrichtung verlaufende lamellenartige Bleche (192, 194; 292) zur Abschirmung und Rückreflexion des UV-Lichts aufweist.

7. Ablaufrinne nach Anspruch 6, **dadurch gekennzeichnet, daß** die vorzugsweise verstellbaren Bleche (192; 292) als Strömungsleitbleche ausgebildet sind, die durch ihre Anstellung gegenüber der Strömungsrichtung eine Einleitung des Abwassers in den UV-Bestrahlungsraum (160; 260) fördern.

8. Ablaufrinne nach einem der Ansprüche 4 bis 7, **dadurch gekennzeichnet, daß** der Boden (262) des UV-Bestrahlungsraumes (260) sich bis zum Rinnenauslauf (250) im wesentlichen waagrecht oder mit leichtem Gefälle erstreckt.

9. Ablaufrinne nach einem der Ansprüche 4 bis 7, **dadurch gekennzeichnet, daß** der Boden (162) des UV-Bestrahlungsraumes (160) vor dem Rinnenauslauf (150) eine wannenartige Mulde begrenzt.

10. Ablaufrinne nach einem der Ansprüche 4 bis 9, **dadurch gekennzeichnet, daß** die Ablaufrinne im Bereich des Bestrahlungsraums (260) verbreitert ist.

11. Ablaufrinne nach einem der Ansprüche 4 bis 10, **dadurch gekennzeichnet, daß** die UV-Bestrahlungsvorrichtung (270) sich quer zur Strömungsrichtung bzw. quer zur Rinnenlängsrichtung erstreckende röhrenförmige UV-Bestrahlungsmodule (272) aufweist.

12. Ablaufrinne nach einem der Ansprüche 4 bis 11, **dadurch gekennzeichnet, daß** in einem den UV-Bestrahlungsraum begrenzenden Wandabschnitt eine Durchführung (182) für ein elektrisches Kabel zur elektrischen Versorgung der UV-Bestrahlungsvorrichtung vorgesehen ist.

13. Ablaufrinne nach einem der Ansprüche 4 bis 12, **dadurch gekennzeichnet, daß** wenigstens ein Innenwandabschnitt des UV-Bestrahlungsraums (160; 260) mit fotokatalytisch aktivem Titandioxid beschichtet ist.

14. Ablaufrinne nach einem der Ansprüche 4 bis 13, **dadurch gekennzeichnet, daß** im Bestrahlungsraum (160; 260) Reinigungsdüsen zur Entfernung von Belag auf der UV-Bestrahlungsvorrichtung (170; 270) vorgesehen sind.

15. Ablaufrinne nach einem der Ansprüche 4 bis 14, **dadurch gekennzeichnet, daß** in einem im wesentlichen senkrecht verlaufenden Ablaufrohr des Rinnenauslaufes eine zusätzliche UV-Bestrahlunsgvorrichtung angeordnet ist mit vorzugsweise sich in Strömungsrichtung erstreckenden UV-Bestrahlungsmodulen.
